# EUROPEAN PATENT SPECIFICATION

(11) **EP 0 298 492 B1**
(45) Date of publication and mention of the grant of the patent: **15.02.1995**
(21) Application number: 88110897.1
(22) Date of filing: 07.07.1988
(51) Int. Cl.: F21V 11/00

(54) **An illumination device**
Leuchtvorrichtung
Dispositif d'éclairage

(30) Priority: 09.07.1987 JP 169728/87; 29.09.1987 JP 147482/87; 29.09.1987 JP 147483/87; 07.10.1987 JP 152808/87; 30.11.1987 JP 181121/87; 28.12.1987 JP 197346/87; 26.01.1988 JP 7692/88; 29.01.1988 JP 9712/88
(43) Date of publication of application: 11.01.1989
(73) Proprietor: DAI-ICHI SEIKO CO. LTD., Kawaguchi-shi Saitama-ken (JP)
(72) Inventor: Katoh, Hideaki, Kawaguchi-shi, Saitama-ken (JP); Noguchi, Nobuhisa, Ohmiya-shi, Saitama-ken (JP); Kikuchi, Yutaka, Ohmiya-shi, Saitama-ken (JP); Kaneko, Isamu, Gyoda-shi, Saitama-ken (JP)
(74) Representative: Liska, Horst, Dr.-Ing.

(56) References cited:
- EP-A- 0 219 255
- DE-C- 863 696
- FR-A- 2 476 798
- FR-A- 2 477 995
- GB-A- 629 266
- US-A- 3 349 233
- US-A- 4 267 489

## Description

### Background of the Invention

### a) Field of the Invention:

The present invention relates to an illumination device, and more specifically to an illumination device so-adapted as to permit obtaining a surface light source having uniform luminance.

### b) Description of the prior art:

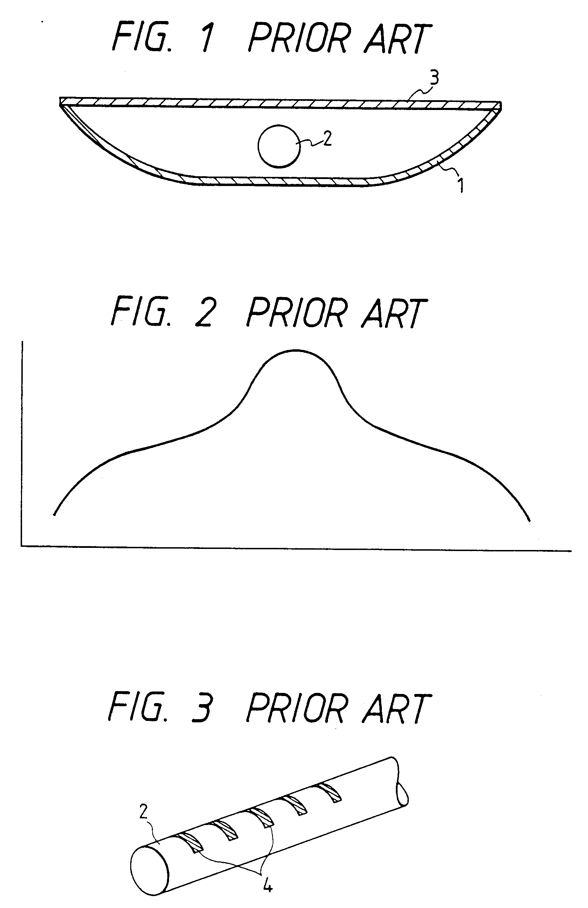

The conventional illumination devices comprise linear light source(s) 2 consisting of a single or plural fluorescent tubes, etc. arranged over a flat or curved reflecting plate 1 as shown in Fig. 1, and a diffusing plate 3 arranged on the side opposite to the linear light source 2.

Out of these illumination devices, the illumination device using a single linear light source provides such luminance distribution on the diffusing plate as shown in Fig. 2 on which luminance is the highest at the central area close to the light source 1 and luminance is gradually lowered toward the marginal portion, thereby making luminance ununiform over the entire range of the diffusing plate 3. Especially when the light source 2 is brought closer to the diffusing plate 3 to design a thin illumination device, luminance is especially enhanced at the area right over the light source 2, out of the areas of the diffusing plate 3, by the rays emitted upward from the light source 2 and attaining directly to the diffusing plate 3. For this reason, attempts have hitherto been made to uniformalize luminance distribution on the diffusing plate by reducing the rays emitted upward from the light source.

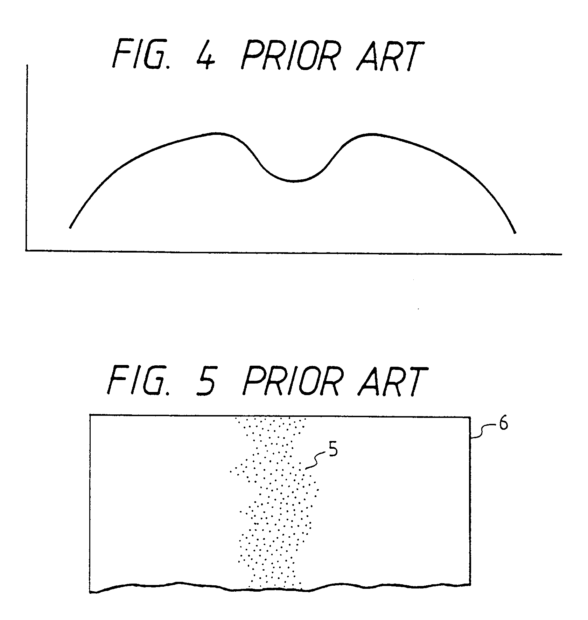

As a conventional example accomplished by such an attempt, there is known the illumination device disclosed by Japanese Published Unexamined Utility Model Application No. 90106/61. In this example, a plural number of linear light-shielding portions 4 having a definite width are arranged discontinuously on the top (close to the diffusing plate) of a fluorescent tube used as the linear light source. In this conventional example, the rays emitted upward from the light source are partially shielded by the light shielding portions and the rays to attain to the central area of the diffusing plate located right over the linear light source are reduced, thereby lowering luminance at the central area. However, luminance is still high at the outer areas neighboring the central area and luminance distribution is as shown in Fig. 4, whereby luminance distribution is not so uniform on the diffusing plate.

As another example of the illumination devices of this type, there is also known the illumination device disclosed by Japanese Published Unexamined Patent Application No. 133008/55 which is similar to the illumination device disclosed in US-PS 4 267 489. In this illumination device, arranged between the diffusing plate and the light source is a light quantity adjusting plate 6 on which light-shielding portions 5 such as black spots are distributed at an adequate density as shown in Fig. 5 for the purpose of obtaining relatively uniform luminance distribution by reducing the rays to reach the area at which luminance would be otherwise high.

This conventional illumination device can provide rather uniform luminance distribution on the diffusing plate, but requires delicate adjustment of the space between the light source and the light quantity adjusting plate at the assembly stage of the illumination device and therefore poses a relatively difficult problem to maintain high precision for the space. Further, when the illumination device comprises a plural number of light sources, distribution, density, etc. of the light-shielding portions must be varied on the light quantity adjusting plate in accordance with variation of luminance on the tube surfaces of the light source, thereby posing a difficult adjusting problem.

### Summary of the Invention

A primary object of the present invention is to provide a thin illumination device having a simple composition and providing uniform luminance distribution on the diffusing plate, said illumination device comprising a reflecting plate, at least one linear light source arranged over the reflecting plate, a diffusing plate arranged on the side opposite to the linear light source with regard to said linear light source and a light quantity adjusting member arranged between the linear light source and the diffusing plate, said light quantity adjusting member comprising a light-shielding pattern arranged on the surface of said linear light source on the diffusing plate side thereof.

According to an aspect of the invention, the light-shielding pattern is made of a material having light-shielding property and is directly formed on the surface of said linear light source or said light-shielding pattern is formed on the surface of said linear light source by putting a film or sheet thereon, said film or sheet being of a material having a light-shielding property, and the light-shielding pattern is arranged to have the largest light-shielding area at the diffusing plate side of said linear light source and narrower light-shielding area towards the sides of said linear light source away from said diffusing plate.

The illumination device according to the present invention may comprise a portion having low reflectance formed on a reflecting mirror at a location right under the light source or in the vicinity thereof in addition to the light-shielding patterns formed on the diffusing plate side of the light source tube.

In a further embodiment of the invention, a light-shielding film is provided which is arranged on the diffusing plate side surface of the light source tube, continuous to connect both the ends of the light source tube, made of an electrically conductive material and which serves also as the trigger coat for the light source tube.

According to a still further embodiment of the invention, the illumination device may comprise a member having low reflectance which is formed on the reflecting plate at a location right under the light source or in the vicinity thereof, made of an electrically conductive material and which serves also as the trigger coat for the light source tube.

The illumination device according to the present invention may be equipped with a light quantity adjusting member formed on the surface of the light source tube and a means for positioning a fluorescent tube to locate said light quantity adjusting member close to the diffusing plate.

### Brief Description of the Drawings

Fig. 1 shows a sectional view illustrating the composition of the conventional illumination device;
Fig. 2 shows a graph illustrating luminance distribution obtained with the illumination device shown in Fig. 1;
Fig. 3 shows a perspective view illustrating the fluorescent tube used in the second example of the conventional illumination device;
Fig. 4 shows a graph illustrating luminance distribution obtained with the second example of the conventional illumination device;
Fig. 5 shows a plan view illustrating the light-shielding plate used in the third example of the conventional illumination device;
Fig. 6 shows a sectional view illustrating composition of Embodiment 1 of the present invention;
Fig. 7 shows a perspective view illustrating shapes of the light quantity adjusting member and low-reflectance portion used in the Embodiment 1;
Fig. 8 through Fig. 12 show diagrams illustrating different forms of the light quantity adjusting member used in the Embodiment 1 of the present invention;
Fig. 13 and Fig. 14 show a perspective view and a plan view illustrating different forms of the low-reflectance portion;
Fig. 15 shows a sectional view illustrating composition of Embodiment 2 of the present invention;
Fig. 16 shows a sectional view illustrating the fluorescent tube used in the Embodiment 2;
Fig. 17 shows a perspective view illustrating the fluorescent tube used in the illumination device preferred as Embodiment 3 of the present invention;
Fig. 18 through Fig. 20 show diagrams illustrating other examples of the pattern formed on the fluorescent tube in the Embodiment 3 of the present invention;
Fig. 21 shows a perspective view illustrating an illumination device preferred as Embodiment 4 of the present invention;
Fig. 22 shows a perspective view illustrating the fluorescent tube used in the Embodiment 4;
Fig. 23 and Fig. 24 show sectional views illustrating the ends of the fluorescent tube shown in Fig. 22;
Fig. 25 shows a sectional view illustrating a positioning mechanism for the fluorescent tube shown in Fig. 22;
Fig. 26 through Fig. 29 shown sectional views illustrating other examples of the positioning mechanism;
Fig. 30 and Fig. 31 show plan views illustrating different positioning mechanisms; and
Fig. 32 and Fig. 33 show sectional views illustrating reflecting plates facilitating to form the low-reflectance portions on the reflecting plate.

### Detailed Description of the Preferred Embodiments

Now, the preferred embodiments of the present invention will be described below with reference to the accompanying drawings.

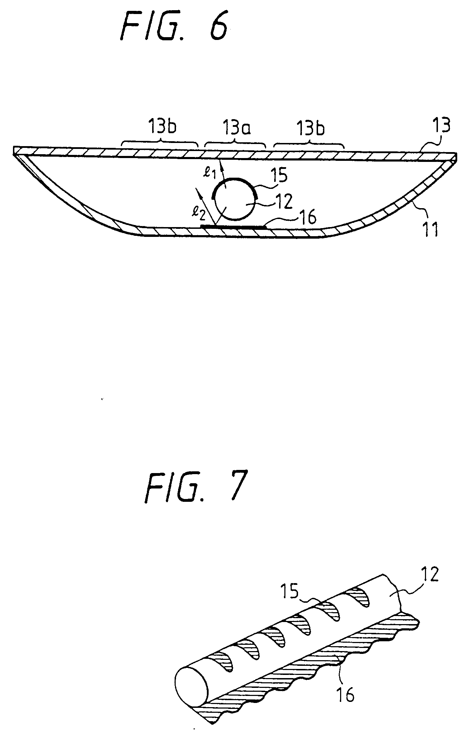

Illustrated in Fig. 6 is embodiment 1 of the illumination device according to the present invention in its sectional view wherein the reference numeral 11 represents a reflecting plate consisting of a flat bottom surface and adjacent inclined surfaces and having an inside mirror surface. The reference numeral 12 designates a linear light source located over the central portion of the bottom surface of the reflecting plate 11 and the reference numeral 13 denotes a diffusing plate arranged on the side opposite to the reflecting plate 11 with regard to the light source 12.

The reflecting plate 11 used in this embodiment can easily be manufactured by molding a synthetic resin as an integral member and evaporation-coating the molding entirely with aluminium or a similar material at a single step. The reference numeral 15 represents a light quantity adjusting member arranged on the top surface of a fluorescent tube 12 used as the linear light source and composed of a light-shielding film having discontinuous patterns, for example, as shown in Fig. 7. This light-shielding film is formed by applying a black material directly to the fluorescent tube or bonding a transparent sheet marked with black patterns to the fluorescent tube. The reference numeral 16 designates a low-reflectance member made of a light absorptive substance and arranged in the vicinity of the portion located right under the linear light source 12. The low-reflectance member has a shape, for example, as shown in Fig. 7.

In the Embodiment 1, light quantity is reduced since the rays emitted upward from the linear light source 12, like the ray ℓ₁, are partially shielded by the light quantity adjusting member (the light shielding patterns). Further, the rays reflected in the vicinity of the portion right under the light source 12, like the ray ℓ₂, are reflected by the low-reflectance member 16 and the light quantity is reduced. The rays emitted upward from the linear light source 12 and attaining to the central portion 13a of the diffusing plate 13 as well as the rays emitted downward from the linear light source 12, reflected obliquely upward and attaining to the central portion 13b neighboring the central portion 13a of the diffusing plate 13 are weakened as described above. Since the Embodiment 1 is capable of adjusting quantity of the rays attaining to the central portion 13a and neighboring portion 13b of the diffusing plate 13, the Embodiment 1 can further uniformalize luminance distribution on the diffusing plate 13.

In the Embodiment 1, the light-shielding patterns may be rectangles having a definite width and a definite length arranged discontinuously at definite intervals. In case of the discontinuous rectangular patterns, however, light quantity is abruptly varied between the top of the fluorescent tube having the light quantity adjusting member (the light-shielding patterns) 15 and the side of the fluorescent tube having no light quantity adjusting member. Accordingly, linear luminance ununiformity stripes may be produced on the diffusing plate 13 in parallel to the linear light source 12. Therefore, the discontinuous patterns consisting of the oval light-shielding patterns as shown in Fig. 7 are more preferable.

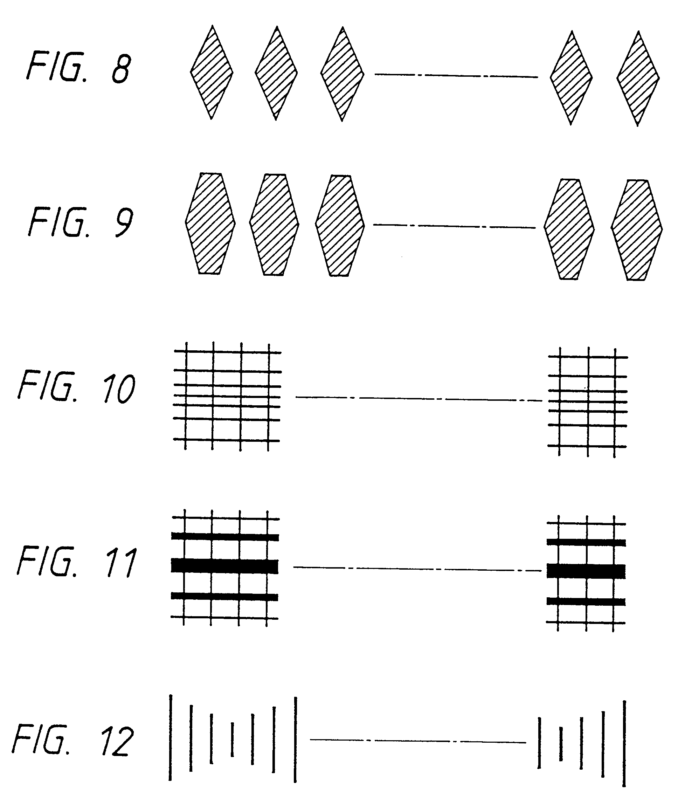

The patterns on the light quantity adjusting member may be, in additon to those shown in Fig. 7, the patterns illustrated in Fig. 8 through Fig. 12.

The patterns on the light quantity adjusting member shown in Fig. 8 are multiple rhombic light-shielding patterns arranged at definite intervals.

The patterns shown in Fig. 9 are multiple light-shielding patterns, each consisting of two trapezoids.

Each of the patterns shown in Fig. 8 and Fig. 9 has a larger width on the top of the fluorescent tube and a smaller width on the side of the fluorescent tube so that the light source equipped with the light-shielding patterns emits rays upward in the smallest quantity and light quantity gradually increases toward the side of the fluorescent tube.

The light-shielding pattern shown in Fig. 10 is a lattice having horizontal stripes at the highest density on the top of the fluorescent tube and the density of the horizontal stripes is lowered toward the side of the fluorescent tube. Accordingly, the transparent (not shielding light) area is the narrowest on the top of the fluorescent tube and becomes larger toward the side of the fluorescent tube. As a result, light quantity is the smallest on the top of the fluorescent tube and becomes larger toward the side of the fluorescent tube.

The light-shielding pattern shown in Fig. 11 is a lattice consisting of stripes having varying thickness. Speaking more concretely, the stripes are the thickest on the top of the fluorescent tube and become thinner toward the side of the fluorescent tube. Accordingly, the pattern shown in Fig. 11 provides substantially the same effect as that obtained with the pattern illustrated in Fig. 10.

Fig. 12 shows light-shielding patterns consisting of lines having different lengths. Since light quantity is varied from location to location on the side of the fluorescent tube, it is possibe to prevent the linear luminance ununiformity stripes from being produced on the diffusing plate.

In addition to the light-shielding patterns described above, it is possible for accomplishing the object of the present invention to design the top surface of the fluorescent tube as a translucent surface functioning as the light adjusting member having transmittance gradually increasing from the top toward the side of the fluorescent tube. Further, it is also possible to design the light-shielding patterns shown in Fig. 7 through Fig. 12 so as to have varying transmittance. Moreover, the object of the present invention can be accomplished by forming multiple black spots at varying densities on the top of the fluorescent tube.

In the next place, the low-reflectance member formed on the reflecting plate 12 is not limited to that illustrated in Fig. 7. For example, the low-reflectance member may have a rectangular shape. In case of the low-reflectance member having a rectangular shape, however, linear luminance ununiformity stripes may be produced on the diffusing plate 13 due to the linear boundary between the reflecting plate 11 having high reflectance and the low-reflectance member 16.

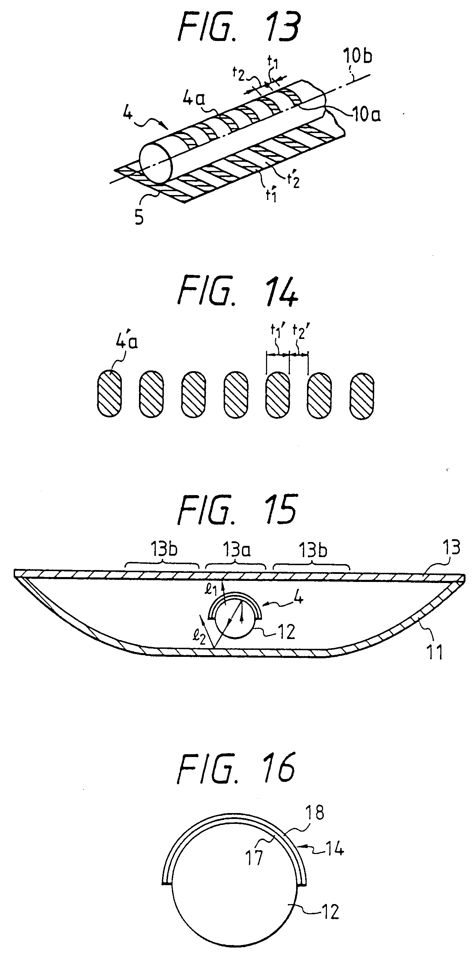

Different shapes of the low-reflectance member 16 are exemplified in Fig. 13 and Fig. 14.

The low-reflectance member shown in Fig. 13 consists of linear low-reflectance films having a definite width t₁′ and made, for example, of a light absorptive material arranged at definite intervals t₂′.

Further, the low-reflectance member shown in Fig. 14 consists of multiple oval films arranged at definite intervals.

Out of the light quantity adjusting members and low-reflectance members used in the Embodiments described above, the low-reflectance member consisting of discontinuous films permits selecting quantity of rays transmitting through the light quantity adjusting member or quantity of rays reflected by the low-reflectance member by selecting the width t₁ or t₁′ and interval t₂ or t₂′. It is therefore possible to obtain uniform luminance on the diffusing plate by properly selecting t₁, t₂, t₁′ and t₂′.

Fig. 15 illustrates a sectional view showing Embodiment 2 of the illumination device according to the present invention. In this embodiment, a light absorptive layer or low-reflectance layer 18 is formed as the light quantity adjusting member 14, with a reflecting layer 17 interposed, on the top surface of the fluorescent tube 12 used as the linear light source.

In the illumination device preferred as the Embodiment 2, the rays directed to portions where the light quantity adjusting member 14 does not exist, like the ray ℓ₁ out of the rays emitted upward from the light source 12, attains directly to the diffusing plate 13. However, the rays directed to the portions where the light quantity adjusting member exists are reflected by the reflecting layer 17 located on the side of the light source, further reflected, like the ray ℓ₂ by the reflecting plate and then directed to the diffusing plate 13.

Since the rays emitted upward from the light source 12 are partially cut by the light quqntity adjusting member 14, similarly to the rays in the other embodiments, only the central portion of the diffusing plate 13 is not especially bright and luminance distribution is relatively uniform on the diffusing plate 13. Further, since the cut rays are reflected by the reflecting layer 17 and reaches, like the ray ℓ₂, the marginal portion of the diffusing plate 13, the rays are utilized effectively with no loss.

If the light absorptive layer 18 is glossy in this embodiment, the rays reflected on the surface of said layer may attain especially to the central portion, etc. of the diffusing plate 13, thereby producing ununiform luminance distribution. It is therefore desirable to design the light absorptive layer 18 so as to have a rough surface or not to be glossy.

A layer coated with a black paint can be considered as the light absorptive layer 18, but such a layer may allow the patterns marked on the light quantity adjusting member to be visible through the diffusing plate while the light source is not ignited. A white paint should be used in order to prevent this inconvenience. The surface of the light absorptive layer 18 should not be glossy also when it is coated with a white paint.

The light quantity adjusting member used in the Embodiment 2 can adopt any of the patterns used in the other embodiments shown in Fig. 7 through Fig. 12.

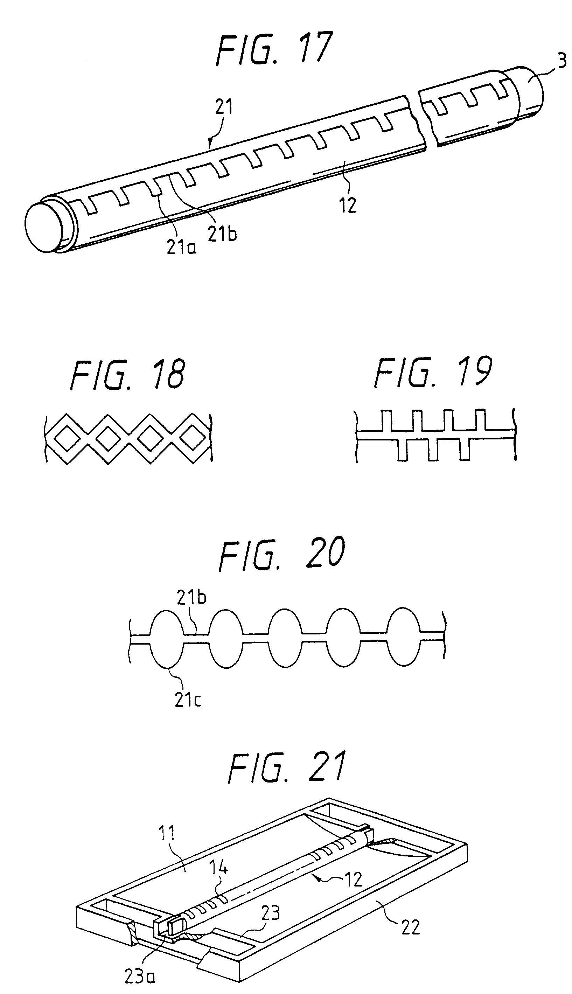

Fig. 17 shows a perspective view illustrating Embodiment 3 of the present invention. The Embodiment 4 is different from the other embodiments in the light quantity adjusting member formed on the fluorescent tube used as the linear light source, and is the same as the other embodiments in the other members. Accordingly, only the fluorescent tube is shown in Fig. 17. In this drawing, the reference numeral 21 represents the light quantity adjusting member which is made of an electrically conductive material, unlike the light quantity adjusting members used in the other embodiments, and has a shape continuous from the end 20 of the fluorescent tube 12 or the vicinity thereof to the other end 20 or the vicinity thereof. This light quantity adjusting member serves to uniformalize luminance on the diffusing plate in the same manner as in the other embodiments and also functions as a trigger coat for the fluorescent tube.

Fig. 18 through Fig. 20 show other patterns on the light quantity adjusting member used in the Embodiment 3. These patterns are also made of electrically conductive materials and continuous from the end to the other end of the fluorescent tube.

In addition to these patterns, the discontinuous patterns already described above can be used on the light quantity adjusting member also serving as the trigger coat when said patterns are made continuous. For composing the light quantity adjusting member made of an electrically conductive material so as to serve also as the trigger cost as in the Embodiment 3, it is sufficient to form the light quantity adjusting member on the fluorescent tube at a position in parallel to the center line of the tube. Accordingly, the Embodiment 3 facilitates positioning of the light quantity adjusting member as compared with the other embodiments which form the light quantity adjusting members on the fluorescent tubes having the trigger coats.

Further, it is possible to design the low-reflectance member 16 shown in Fig. 6, etc. so as to serve also as a trigger coat. That is to say, it is sufficient for this purpose to compose said low-reflectance member 16 of an electrically conductive material. When the low-reflectance member is made of an electrically conductive material as described above, it is unnecessary to form a trigger coat on the fluorescent tube since it is arranged close to the low-reflectance member. Printing ink containing carbon, aluminium, copper, etc. can be used as the materials to compose the low-reflectance member.

Also when the low-reflectance member is so designed as to serve as a trigger coat, positioning of the light quantity adjusting member is facilitated at the stage to form the light quantity adjusting member on the fluorescent tube.

Fig. 21 shows a perspective view illustrating Embodiment 4 of the present invention.

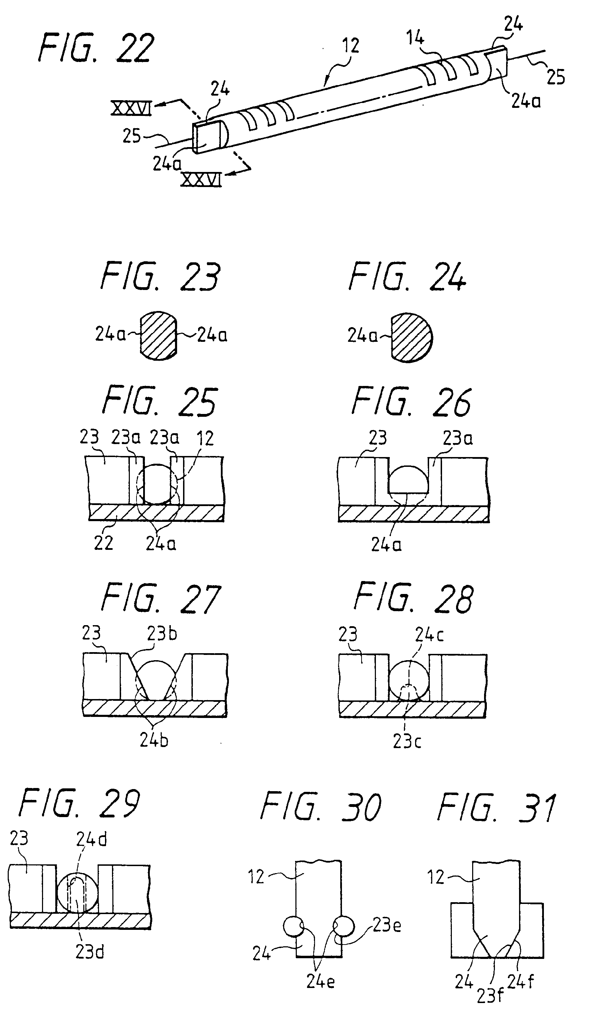

Out of the illumination devices according to the present invention, the embodiments which form the light quantity adjusting member on the fluorescent tube require arranging the fluorescent tube so that the light quantity adjusting member correctly faces the diffusing plates at the stage of assembly. The Embodiment 4 facilitates the positioning of the fluorescent tube. In Fig. 21, the reference numeral 22 represents the illumination device body and the reference numeral 23 designates a holding plate having a positioning portion 23a. The illumination device is composed of the reflecting plate 11 arranged in the body 22, the holding plate 23 for holding the fluorescent tube 12 equipped with the light quantity adjusting member 14 and a diffusing plate (not shown) arranged on the body. The fluorescent tube 12 has the composition shown in Fig. 22 and its end 24 is formed in the shape having flat surfaces 24a. The reference numeral 25 represents a lead wire.

Since the flat surfaces 24a are formed at the ends 24 of the fluorescent tube 12, it can be held in the correctly positioned state simply by inserting and holding the ends 24 into the positioning portions 23a of the holding plate 23 as shown in Fig. 25. Further, the light quantity adjusting member 14 cannot be mispositioned due to rotation of the fluorescent tube after it is set in position. The flat surface may be formed only on one side at the end of the fluorescent tube as shown in Fig. 24.

Fig. 26 through Fig. 31 show other examples of the positioning means for the fluorescent tube, i.e., combinations of the positioning portion of the holding plate 23 and end of the fluorescent tube.

In the example shown in Fig. 26, a flat surface is formed on the bottom at the end 24 of the fluorescent tube so as to correctly position the fluorescent tube by a combination with the positioning portion of the holding plate.

In the example shown in Fig. 27, the fluorescent tube has a V-shaped end 24b and a V-shaped groove 23b is formed in the positioning portion of the holding plate 23.

In the example shown in Fig. 28, a concavity 24c is formed in the end of the fluorescent tube so as to position the fluorescent tube by a combination with a protrusion 23c formed on the holding plate 23.

In the example illustrated in Fig. 29, the fluorescent tube is positioned by a combination of a hole 24d formed in the end of the fluorescent tube and a pin 23d studded in the holding plate 23.

Fig. 30 shows an example wherein the fluorescent tube is positioned by concavities 23e formed on both the sides of the end of the fluorescent tube and two pins 24e studded in the holding plate 23.

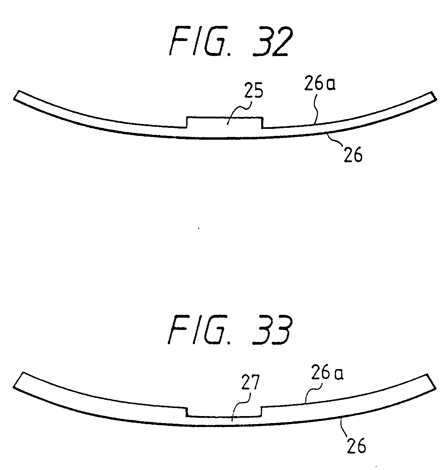

Fig. 31 illustrates an example so adapted as to position the fluorescent tube by a thinned tip 24f of the end of the fluorescent tube and the holding plate 23f having a support of the matching shape.

The diagrams shown in Fig. 30 and Fig. 31 are top views respectively.

The low-reflectance members arranged on the reflecting plate located right under the fluorescent tube used as the linear light source in the embodiments described above are formed by applying low-reflectance substances or bonding low-reflectance sheets to the predetermined positon on the reflecting plate. The low-reflectance members must be precisely positioned so as to be located right under the fluorescent tube when the illumination device is assembled.

In order to meet this demand and form the low-reflectance member in simple procedures, the following means can be used.

At the stage to mold the reflecting plate with a synthetic resin, a reflecting plate body is prepared in the form, as shown in Fig. 32, having a convexity 25 at the position where the low-reflectance member is to be formed. Then,an aluminium layer is formed on the surface 26a of the reflecting plate body 26. Further, the convexity 25 is cut so as to cut off the aluminium layer from only the convexity 25 and expose the synthetic risin layer having low reflectance to be used as the low-reflectance member. By this method, the cut surface will be a rough surface as desired.

As another means, a reflecting plate body 26 is molded by a synthetic resin in the form, as shown in Fig. 33, having a concavity 27 at the position where the low-reflectance member is to be formed, a low-reflectance tape is bonded to the concavity 27 and a layer of aluminium or the similar material is formed on the other surface, whereby a low-reflectance member is formed.

A third means to form the low-reflectance member is as described below. A tape is bonded, by the hot stamp method or the similar method, to the position where the low-reflectance member is to be formed on the reflecting plate body and then a layer of aluminium or the similar material is formed on the surface of the reflecting plate body, whereafter the tape is peeled off to expose the base skin of the reflecting plate body at the position to be used as the low-reflecting member.

As a variant of the third means described above, a ribbon is formed by integrating a release tape with a metallic foil composing a metal layer and, at the stage to mold the reflecting plate body with a synthetic resin, a mirror surface including the ribbon is formed by the insert mold method. After the molding, a low-reflecting member is formed at the predetermined position by peeling off the tape.

A fourth means to form the low-reflectance member is to mark the boundary around the low-reflectance member at the stage to form a layer of metal such as aluminium on the reflecting plate, and bond a low-reflectance tape along the marks.

For marking the boundary, it is sufficient to use a mask at the stage to form the metal layer. Alternately, linear concavities or linear convexities may be formed as the mark at the stage to mold the reflecting plate body with a synthetic resin. When the reflecting plate is to be formed by bonding a metal foil ribbon to the surface of the reflecting plate body by the insert mold method or hot stamp method, it is sufficient to trace marks on the ribbon.

The illumination device according to the present invention described above comprises a light quantity adjusting memeber having a simple composition and is capable of remarkably uniformalizing luminance distribution on the diffusing plate by selecting shape and arrangement of the light-shielding patterns on the light quantity adjusting member. Further, luminance distribution is more uniformalized by forming a low-reflectance member on the reflecting plate.

## Claims

1. An illumination device, comprising:
- a reflecting plate (11),
- at least one linear light source (12) arranged over said reflecting plate (11),
- a diffusing plate (13) arranged on the side opposite to said reflecting plate (11) with regard to said linear light source (12), and
- a light quantity adjusting member (14) arranged between said linear light source (12) and said diffusing plate (13), said light quantity adjusting member (14) comprising a plurality of light-shielding patterns (15) arranged on the surface of said linear light source (12) on the diffusing plate side thereof,
**characterized in that** each of said light-shielding patterns (15) is made of a material having a light-shielding property and is directly formed on the surface of said linear light source (12) or each of said light-shielding patterns (15) is formed on the surface of said linear light source (12) by putting a film (15) or sheet thereon, said film (15) or sheet being of a material having a light-shielding property, and in that each of said light-shielding patterns (15) is arranged to have the largest light-shielding area at the diffusing plate side of said linear light source (12) and a narrower light-shielding area towards the sides of said linear light source away from said diffusing plate.

2. Illumination device according to claim 1,
characterized in that said light-shielding patterns (15) are oval shaped.

3. Illumination device according to claim 1,
characterized in that said light-shielding patterns (15) rhombic in shape.

4. An illumination device according to Claim 1,
characterized in that said light quantity adjusting member (14) is a lattice-shaped light-shielding film.

5. An illumination device according to Claim 1,
characterized in that said light quantity adjusting member (14) consists of multiple black spots arranged at the highest density at the top.

6. An illumination device according to Claim 1,
characterized in that said light quantity adjusting member (14) is a light-shielding film (21) made of an electrically conductive material having the largest light-shielding area at the top, having smaller light-shielding area toward the side and being continuous from one end to the other end of said light source (12).

7. An illumination device according to Claim 1,
characterized in that said reflecting plate (11) has a low-reflectance member (16) at the location right under said light source (12).

8. An illumination device according to Claim 7,
characterized in that said low-reflectance member (16) consists of a layer made of an electrically conductive material.

9. An illumination device according to Claim 7,
characterized in that said reflecting plate (11) is formed by arranging a reflecting layer on a reflecting plate body (26) having a convexity (25) and then cutting said convexity (25).

10. An illumination device according to Claim 7,
characterized in that said reflecting plate (11) is formed by arranging a low-reflectance layer in a concavity (27) formed in a reflecting plate body (26) and a reflecting layer on the surface (26a) other than the concavity (27) of the reflecting plate body (26).

11. An illumination device according to Claim 1,
characterized in that said illumination device further comprises two holding frames (23) at least one of which has a positioning means (23a), said holding frames (23) being so adapted as to hold said light source (12) at both the ends (24) thereof in such a manner that the light quantity adjusting member (14) is positioned atop by said positioning means (23a).

## Patentansprüche

1. Leuchtvorrichtung, umfassend:
- eine Reflexionsplatte (11),
- wenigstens eine über der Reflexionsplatte (11) angeordnete lineare Lichtquelle (12),
- eine Streuplatte (13), welche bezüglich der linearen Lichtquelle (12) auf der der Reflexionsplatte (11) gegenüberliegenden Seite angeordnet ist, und
- ein Lichtmengenregulierelement (14), welches zwischen der linearen Lichtquelle (12) und der Streuplatte (13) angeordnet ist, wobei das Lichtmengenregulierelement (14) eine Mehrzahl lichtabschirmender Muster (15) umfaßt, die auf der Oberfläche der linearen Lichtquelle (12) auf deren Streuplattenseite angeordnet sind,
dadurch gekennzeichnet,
daß jedes der lichtabschirmenden Muster (15) aus einem Material mit einer lichtabschirmenden Eigenschaft gefertigt und direkt auf der Oberfläche der linearen Lichtquelle (12) ausgebildet ist oder jedes der lichtabschirmenden Muster (15) auf der Oberfläche der linearen Lichtquelle (12) durch Aufbringen eines Films (15) oder Blatts auf diese ausgebildet ist, wobei der Film (15) oder das Blatt aus einem Material mit einer lichtabschirmenden Eigenschaft bestehen, und daß jedes der lichtabschirmenden Muster (15) so angeordnet ist, daß es die größte lichtabschirmende Fläche auf der Streuplattenseite der linearen Lichtquelle (12) und von der Streuplatte weg zu den Seiten der linearen Lichtquelle hin eine geringere lichtabschirmende Fläche aufweist.

2. Leuchtvorrichtung nach Anspruch 1,
dadurch gekennzeichnet,
daß die lichtabschirmenden Muster (15) oval geformt sind.

3. Leuchtvorrichtung nach Anspruch 1,
dadurch gekennzeichnet,
daß die lichtabschirmenden Muster rhombischer Form sind.

4. Leuchtvorrichtung nach Anspruch 1,
dadurch gekennzeichnet,
daß das Lichtmengenregulierelement (14) ein gitterförmiger lichtabschirmender Film ist.

5. Leuchtvorrichtung nach Anspruch 1,
dadurch gekennzeichnet,
daß das Lichtmengenregulierelement (14) aus einer Vielzahl schwarzer Punkte besteht, welche an der Oberseite mit höchster Dichte angeordnet sind.

6. Leuchtvorrichtung nach Anspruch 1,
dadurch gekennzeichnet,
daß das Lichtmengenregulierelement (14) ein aus einem elektrisch leitfähigen Material gefertigter lichtabschirmender Film (21) ist, der die größte lichtabschirmende Fläche an der Oberseite aufweist, eine kleinere lichtabschirmende Fläche zur Seite hin aufweist und von einem Ende zum anderen Ende der Lichtquelle (12) durchgängig ist.

7. Leuchtvorrichtung nach Anspruch 1,
dadurch gekennzeichnet,
daß die Reflexionsplatte (11) an der Stelle unmittelbar unterhalb der Lichtquelle (12) ein Element (16) geringen Reflexionsvermögens aufweist.

8. Leuchtvorrichtung nach Anspruch 7,
dadurch gekennzeichnet,
daß das Element (16) geringen Reflexionsvermögens aus einer aus einem elektrisch leitfähigen Material gefertigten Schicht besteht.

9. Leuchtvorrichtung nach Anspruch 7,
dadurch gekennzeichnet,
daß die Reflexionsplatte (11) durch Anordnen einer reflektierenden Schicht auf einem Reflexionsplattenkörper (26) mit einer Konvexität (25) und anschließendes Abtrennen der Konvexität (25) gebildet ist.

10. Leuchtvorrichtung nach Anspruch 7,
dadurch gekennzeichnet,
daß die Reflexionsplatte (11) durch Anordnen einer Schicht geringen Reflexionsvermögens in einer in einem Reflexionsplattenkörper (26) ausgebildeten Konkavität (27) und einer reflektierenden Schicht auf der übrigen Oberfläche (26a), ausgenommen die Konkavität (27), des Reflexionsplattenkörpers (26) gebildet ist.

11. Leuchtvorrichtung nach Anspruch 1,
dadurch gekennzeichnet,
daß die Leuchtvorrichtung ferner zwei Halterahmen (23) umfaßt, von denen wenigstens einer ein Positionierungsmittel (23a) aufweist, wobei die Halterahmen (23) so ausgeführt sind, daß sie die Lichtquelle (12) an deren beiden Enden (24) in solcher Weise halten, daß das Lichtmengenregulierelement (14) durch das Positionierungsmittel (23a) obenliegend positioniert ist.

## Revendications

1. Dispositif d'illumination, comprenant :
- une plaque réflectrice (11),
- au moins une source lumineuse (12) linéaire, disposée sur ladite plaque réflectrice (11),
- une plaque de diffusion (13), disposée sur la face opposée à ladite plaque réflectrice (11), par rapport à ladite source lumineuse (12) linéaire, et
- un organe d'ajustement de quantité de lumière (14), disposé entre ladite source lumineuse (12) linéaire et ladite plaque de diffusion (13), ledit organe d'ajustement de quantité de lumière (14) comprenant une pluralité de motifs de masquage de lumière (15), disposés sur la surface de ladite source de lumière (12) linéaire, sur son côté plaque de diffusion,
caractérisé en ce que chacun des motifs de masquage de lumière (15) est réalisé en un matériau ayant une propriété d'isolation à la lumière et est directement formé sur la surface de ladite source de lumière (12) linéaire, ou chacun des motifs de masquage de lumière (15) est formé sur la surface de ladite source de lumière (12) linéaire, par application sur lui d'un film (15) ou d'une feuille, ledit film (15) ou ladite feuille étant en un matériau ayant une propriété de masquage de lumière, et en ce que chacun des motifs de masquage de lumière (15) est disposé pour avoir l'aire de masquage de lumière la plus grande sur la face de ladite source de lumière (12) linéaire située du côté de la plaque de diffusion et une aire de masquage de lumière plus étroite en direction des faces de ladite source de lumière linéaire éloignées de ladite plaque de diffusion.

2. Dispositif d'illumination selon la revendication 1, caractérisé en ce que lesdits motifs de masquage de la lumière (15) sont de forme ovale.

3. Dispositif d'illumination selon la revendication 1, caractérisé en ce que lesdits motifs de masquage de la lumière (15) sont de forme rhombique.

4. Dispositif d'illumination selon la revendication 1, caractérisé en ce que ledit organe d'ajustement de quantité de lumière (14) est un film de masquage de la lumière, formé en réseau.

5. Dispositif d'illumination selon la revendication 1, caractérisé en ce que ledit organe d'ajustement de quantité de lumière (14) est composé de points noirs multiples, agencés avec une densité de points maximale en partie haute.

6. Dispositif d'illumination selon la revendication 1, caractérisé en ce que ledit organe d'ajustement de quantité de lumière (14) est un film de masquage de la lumière (21), réalisé en un matériau conducteur de l'électricité, ayant une aire de masquage de la lumière maximale en partie haute, une aire de masquage de la lumière plus petite en direction du côté et continu, d'une extrémité à l'autre de ladite source de lumière (12).

7. Dispositif d'illumination selon la revendication 1, caractérisé en ce que ladite plaque réflectrice (11) comporte un organe à faible réflectance (16), à l'endroit se trouvant juste au-dessous de ladite source lumineuse (12).

8. Dispositif d'illumination selon la revendication 7, caractérisé en ce que ledit organe à faible réflectance (16) est composé d'une couche en matériau conducteur de l'électricité.

9. Dispositif d'illumination selon la revendication 7, caractérisé en ce que ladite plaque réflectrice (11) est formée par disposition d'une couche réflectrice sur un corps de plaque réflectrice (26) ayant une partie convexe (25) et, ensuite par découpe de ladite partie convexe (25).

10. Dispositif d'illumination selon la revendication 7, caractérisé en ce que ladite plaque réflectrice (11) est formée par disposition d'une couche à faible réflectance dans une concavité (27) ménagée dans un corps de plaque réflectrice (26), et une couche réfléchissante sur la surface (26a), autre que la concavité (27) du corps de plaque réfléchissante (26).

11. Dispositif d'illumination selon la revendication 1, caractérisé en ce que ledit dispositif d'illumination comprend en outre deux cadres de maintien (23), dont au moins l'un comporte un moyen de positionnement (23a), lesdits cadres de positionnement (23) étant adaptés de façon à maintenir ladite source lumineuse (12) à ses deux extrémités (24), de manière que l'organe d'ajustement de quantité de lumière (14) soit positionné au sommet par ledit moyen de positionnement (23a).
